# EUROPÄISCHE PATENTSCHRIFT

(11) **EP 2 605 945 B1**
(45) Veröffentlichungstag und Bekanntmachung des Hinweises auf die Patenterteilung: **29.04.2015**
(21) Anmeldenummer: 11730913.8
(22) Anmeldetag: 07.07.2011
(51) Int. Cl.: B60T 13/563, B60T 13/52

(54) **UNTERDRUCKBREMSKRAFTVERSTÄRKER MIT REDUZIERTER GERÄUSCHEMISSION UND VERFAHREN ZUM HERSTELLEN EINES SOLCHEN UNTERDRUCKBREMSKRAFTVERSTÄRKERS**
VACUUM BRAKE FORCE BOOSTER WITH REDUCED NOISE EMISSION AND METHOD FOR MANUFACTURING A VACUUM BRAKE FORCE BOOSTER OF SAID TYPE
SERVOFREIN À DÉPRESSION À ÉMISSION SONORE RÉDUITE ET PROCÉDÉ DE FABRICATION D'UN TEL SERVOFREIN À DÉPRESSION

(30) Priorität: 19.08.2010 DE 102010034828
(43) Veröffentlichungstag der Anmeldung: 26.06.2013
(73) Patentinhaber: Lucas Automotive GmbH, 56070 Koblenz (DE)
(72) Erfinder: FREY, Karl-Heinz, 56112 Lahnstein (DE); EICK, Ruediger, 56283 Noertershausen (DE)
(74) Vertreter: Thum, Bernhard
(86) Internationale Anmeldenummer: PCT/EP2011/003388
(87) Internationale Veröffentlichungsnummer: WO 2012/022395

(56) Entgegenhaltungen:
- EP-A1- 1 231 122
- DE-A1-102008 025 712

## Beschreibung

Die vorliegende Erfindung betrifft einen Unterdruckbremskraftverstärker für eine Kraftfahrzeugbremsanlage, umfassend ein entlang einer Längsachse bewegbares Krafteingangsglied, das mit einem Bremspedal gekoppelt oder koppelbar ist, eine durch das Krafteingangsglied betätigbare Steuerventilanordnung, eine in einem Gehäuse angeordnete Kammeranordnung, mit wenigstens einer Arbeitskammer und wenigstens einer Unterdruckkammer, die über eine bewegliche Wand voneinander getrennt sind, und ein Kraftausgangsglied zum Übertragen einer Betätigungskraft, wobei die wenigstens eine Arbeitskammer wahlweise mit einer Unterdruckquelle oder der Atmosphäre verbindbar ist, wobei die Steuerventilanordnung ein Steuerventilgehäuse aufweist, das mit der wenigstens einen beweglichen Wand zur gemeinsamen Bewegung gekoppelt ist, und wobei die Steuerventilanordnung eine axialspielbehaftete Kraftübertragungsanordnung aufweist, die im Kraftübertragungsweg zwischen dem Krafteingangsglied und dem Kraftausgangsglied angeordnet ist. Ein gattungsgemäßer Bremskraftverstärker ist aus EP-A-1 231 122 bekannt.

Die Erfindung betrifft ferner ein Verfahren zum Herstellen eines derartigen Bremskraftverstärkers. Ein derartiger Unterdruckbremskraftverstärker ist aus dem Stand der Technik bekannt. So zeigt beispielsweise das Dokument DE 10 2008 025 712 A1 einen solchen Bremskraftverstärker. Bei diesem Stand der Technik wurde erkannt, dass Geräusche auftreten können, wenn die beim Lösen der Bremsen frei werdende Energie zu einem hörbaren Anschlagen eines Wegbegrenzungselement am Gehäuse führt. Derartige Anschlaggeräusche sind seitens der Kraftfahrzeughersteller unerwünscht. Diesem Problem wird gemäß dem Stand der Technik dadurch begegnet, dass verschiedene Dämpfungsanordnungen an oder zwischen Kontaktflächen aufeinander schlagender Bauteile angebracht werden, um so das Anschlagen zu dämpfen.

Es hat sich jedoch gezeigt, dass auch im Bereich der Kraftübertragungsanordnung zwischen dem Krafteingangsglied und dem Kraftausgangsglied unerwünschte Geräusche auftreten können. Diese Kraftübertragungsanordnung ist üblicherweise axialspielbehaftet ausgeführt, was insbesondere deshalb erforderlich ist, um ein allzu abruptes Ansprechen des Bremskraftverstärkers auf eine Bremsbetätigung zu vermeiden. Aufgrund des beabsichtigt vorgesehenen Axialspiels innerhalb der Kraftübertragungsanordnung besteht aber nach Erkenntnis der Erfinder das Problem, dass fahrbetriebsbedingt auftretende Vibrationen auf die Bauteile der Kraftübertragungsanordnung des Bremskraftverstärkers übertragen werden können und diese so unerwünschte Vibrationsgeräusche erzeugen. Derartige Vibrationsgeräusche lassen sich durch Dämpfungsanordnungen nicht beseitigen, weil im Bereich der Kraftübertragungsanordnung Dämpfungsanordnungen das Ansprechverhalten stören können. Außerdem würden sie starken mechanischen Belastungen und damit Verschleiß ausgesetzt.

Es ist daher eine Aufgabe der vorliegenden Erfindung, einen Unterdruckbremskraftverstärker der eingangs bezeichneten Art bereitzustellen, bei dem Vorkehrungen getroffen sind, um Geräusche induzierende Vibrationen in der Kraftübertragungsanordnung zwischen Krafteingangsglied und Kraftausgangsglied zu vermeiden.

Diese Aufgabe wird mit einem Unterdruckbremskraftverstärker der eingangs bezeichneten Art gelöst, bei dem vorgesehen ist, dass wenigstens ein Bauteil der Kraftübertragungsanordnung aus magnetischem oder ferromagnetischem Material hergestellt und einem permanent anliegenden Magnetfeld ausgesetzt ist.

Die Erfinder haben erkannt, dass die axialspielbehaftete Kraftübertragungsanordnung dadurch akustisch beruhigt werden kann, dass wenigstens eines ihrer Bauteile aus magnetischem oder ferromagnetischem Material hergestellt ist und einem permanent anliegenden Magnetfeld ausgesetzt wird. Dadurch kann das jeweilige Bauteil durch das anliegenden Magnetfeld magnetisch in eine Ausgangsstellung "vorgespannt" und zu einem gewissen Grad in dieser gehalten werden. Durch diese Maßnahme lässt sich verhindern, dass das jeweilige Bauteil frei schwingen und dadurch fahrbetriebsbedingt auftretende Vibrationen annehmen und geräuscherzeugend übertragen kann. Durch die Erfindung ist es möglich, den Unterdruckbremskraftverstärker an sich strukturell im Wesentlichen unverändert zu lassen. Allein durch geeignete Materialwahl und Ausbildung eines der Bauteile der Kraftübertragungsanordnung aus ferromagnetischem oder ferrimagnetischem Material lässt sich bereits der gewünschte Effekt einer Vermeidung unerwünschter Geräusche erzielen, wenn ein Magnetfeld anliegt.

Gemäß einer Weiterbildung der Erfindung kann vorgesehen sein, dass die Kraftübertragungsanordnung in axialer Richtung vom Krafteingangsglied zum Kraftausgangsglied betrachtet einen Übertragungskolben, ein Kontaktelement und eine an dem Kraftausgangsglied anliegende gummielastische Reaktionsscheibe aufweist. Ferner ist es bei einer Ausführungsform der Erfindung möglich, dass die Kraftübertragungsanordnung ein Wegbegrenzungselement aufweist. Wenigstens eine dieser Komponenten - Übertragungskolben, Kontaktelement, Reaktionsscheibe und Wegbegrenzungselement - kann erfindungsgemäß magnetisiert und wenigstens eine weitere dieser Komponenten kann erfindungsgemäß ferromagnetisch ausgebildet sein. Es versteht sich, dass erfindungsgemäß auch mehrere Komponenten beziehungsweise die gesamte Kraftübertragungsanordnung ferromagnetisch ausgebildet sein können und eine der Komponenten permanentmagnetisch ausgebildet ist beziehungsweise ein Permanentmagnetfeld von außen auferlegt wird.

Gemäß einer Ausführungsvariante der Erfindung kann vorgesehen sein, dass die gummielastische Reaktionsscheibe mit magnetisierbaren Partikeln, insbesondere aus ferromagnetischem Material, ausgebildet ist, wobei diese zur Ausbildung eines Magnetfelds magnetisiert sein können. Die gummielastische Reaktionsscheibe ist üblicherweise aus einem Gummimaterial hergestellt. In dieses lässt sich während der Herstellung entsprechend ferromagnetisches Material, beispielsweise Metallpulver, einlagern, ohne deren physikalische Eigenschaften zu verändern.

Alternativ zu einer geänderten Materialwahl für die einzelnen Bauteile ist es ferner erfindungsgemäß möglich, dass an wenigstens einem Bauteil der Steuerventilanordnung ein Permanentmagnet angebracht oder in diesem integriert ist. In diesem Zusammenhang sieht eine Ausführungsform der Erfindung vor, dass der Permanentmagnet am Steuerventilgehäuse angebracht oder in diesem integriert ist. Hierfür kann im Steuerventilgehäuse eine spezielle Ausnehmung vorgesehen werden. Zusätzlich oder alternativ zu dieser Ausführungsvariante ist es erfindungsgemäß ferner möglich, dass der Permanentmagnet am Kontaktelement angebracht oder in diesem integriert ist. Darüber hinaus kann in diesem Zusammenhang ferner vorgesehen sein, dass der Permanentmagnet am Übertragungskolben angebracht oder in diesem integriert ist.

Erfindungsgemäß ist vorzugsweise vorgesehen, dass das Magnetfeld in axialer Richtung, d.h. in Richtung der Längsachse, wirksam ist. Es reicht aber aus, wenn das Magnetfeld eine Kraftkomponente in axialer Richtung aufweist.

Wie eingangs erläutert, betrifft die Erfindung auch ein Verfahren zum Herstellen eines Unterdruckbremskraftverstärkers der vorstehend beschriebenen Art, wobei der Unterdruckbremskraftverstärker umfasst: ein entlang einer Längsachse bewegbares Krafteingangsglied, das mit einem Bremspedal gekoppelt oder koppelbar ist, eine durch das Krafteingangsglied betätigbare Steuerventilanordnung, eine in einem Gehäuse angeordnete Kammeranordnung, mit wenigstens einer Arbeitskammer und wenigstens einer Unterdruckkammer, die über eine bewegliche Wand voneinander getrennt sind, und ein Kraftausgangsglied zum Übertragen einer Betätigungskraft, wobei die wenigstens eine Arbeitskammer wahlweise mit einer Unterdruckquelle oder der Atmosphäre verbindbar ist, wobei die Steuerventilanordnung ein Steuerventilgehäuse aufweist, das mit der wenigstens einen beweglichen Wand zur gemeinsamen Bewegung gekoppelt ist, und wobei die Steuerventilanordnung eine axialspielbehaftete Kraftübertragungsanordnung aufweist, die im Kraftübertragungsweg zwischen dem Krafteingangsglied und dem Kraftausgangsglied angeordnet ist. Das erfindungsgemäße Verfahren zeichnet sich aus durch Schritte:
- Herstellen wenigstens eines Bauteils der Kraftübertragungsanordnung aus ferrimagnetischem oder ferromagnetischem Material und
- Anlegen eines Permanentmagnetfeldes an die Kraftübertragungsanordnung.

Dabei kann das wenigstens eine Bauteil der Kraftübertragungsanordnung bereits vor dem Einbau oder erst nach dem Einbau magnetisiert werden. Letzteres hat den Vorteil, dass z.B. ein Aufsammeln ferritischer Partikeln während des Transports zur Montagelinie durch die fehlende magnetische Wechselwirkung verhindert wird.

Die Erfindung wird im Folgenden beispielhaft anhand der beiliegenden Figuren erläutert. Es stellen dar:
- Fig. 1: eine achsenthaltende Schnittansicht durch einen erfindungsgemäßen Unterdruckbremskraftverstärker;
- Fig. 2: eine Detailschnittansicht der Steuerventilanordnung einer ersten Ausführungsform des erfindungsgemäßen Bremskraftverstärkers;
- Fig. 3: eine Detailschnittansicht der Steuerventilanordnung einer zweiten Ausführungsform des erfindungsgemäßen Bremskraftverstärkers;
- Fig. 4: eine Detailschnittansicht der Steuerventilanordnung einer dritten Ausführungsform des erfindungsgemäßen Bremskraftverstärkers; und
- Fig. 5: eine Detailschnittansicht der Steuerventilanordnung einer vierten Ausführungsform des erfindungsgemäßen Bremskraftverstärkers.

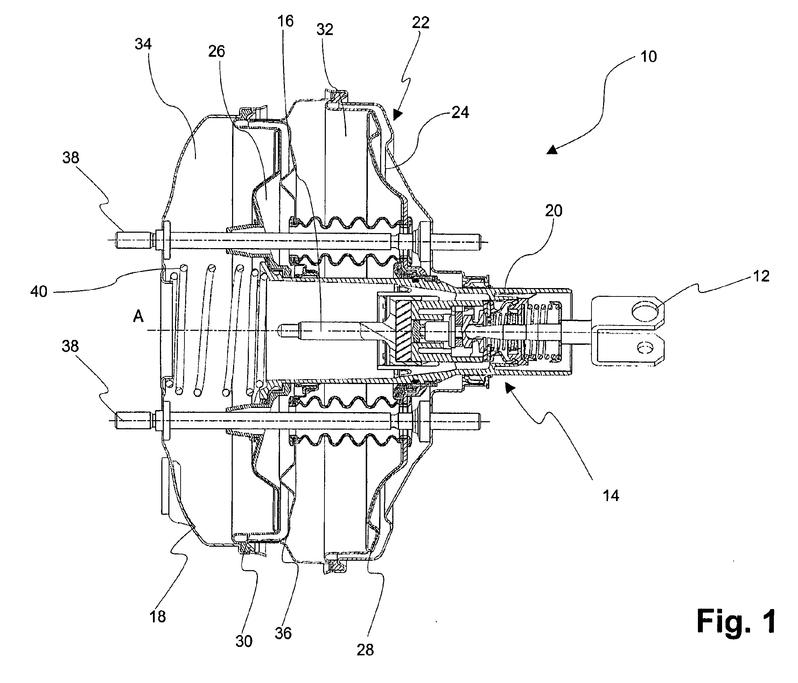

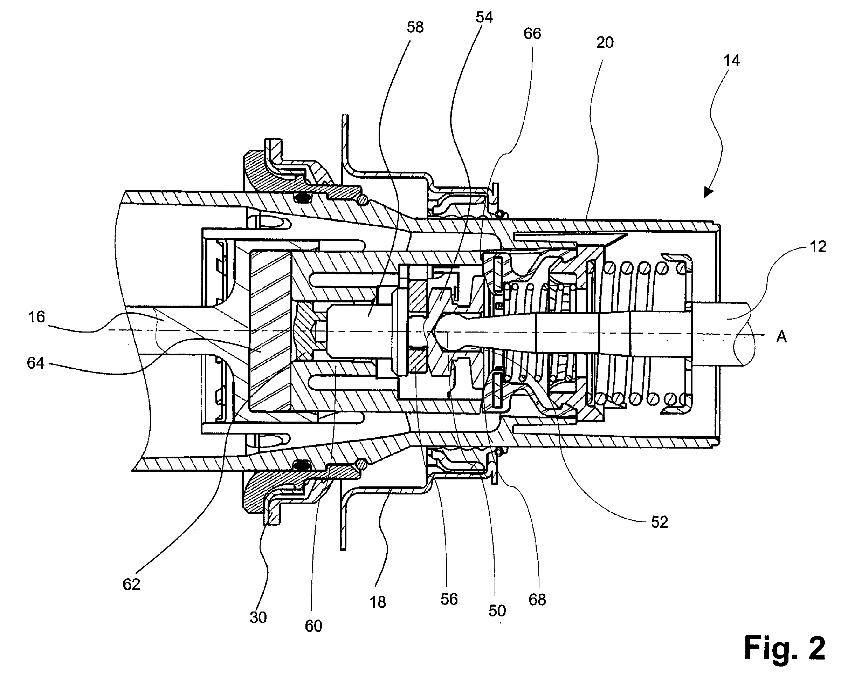

In Figur 1 ist ein erfindungsgemäßer Unterdruckbremskraftverstärker in achsenthaltender Schnittansicht gezeigt und allgemein mit 10 bezeichnet. Dieser umfasst ein Krafteingangsglied 12, das mit einem nicht gezeigten Bremspedal koppelbar ist. Das Krafteingangsglied 12 erstreckt sich mit seinem in Figur 1 linken Ende in eine Steuerventilanordnung 14 hinein, die im Detail mit Bezug auf die Figuren 2-5 beschrieben werden wird. Die Steuerventilanordnung 14 weist ein Kraftausgangsglied 16 auf, das mit einem nicht gezeigten Hauptbremszylinder koppelbar ist. Die Steuerventilanordnung 14 ist in einem Gehäuse 18 aufgenommen und in diesem entlang einer Längsachse A verlagerbar. Sie weist ein Steuerventilgehäuse 20 auf.

In dem Gehäuse 18 ist eine Kammeranordnung 22 vorgesehen. Im gezeigten Ausführungsbeispiel handelt es sich um eine Tandem-Kammeranordnung. Diese umfasst eine erste Arbeitskammer 24 und eine zweite Arbeitskammer 26. Jede der beiden Arbeitskammern 24 und 26 ist durch jeweils eine mit dem Steuerventilgehäuse 20 fest gekoppelte bewegliche Wand 28, 30 von einer Unterdruckkammer 32, 34 getrennt. Mit anderen Worten ist in der Kammeranordnung 22 ein erstes Paar aus Arbeitskammer 24 und Unterdruckkammer 32 und ein zweites Paar aus Arbeitskammer 26 und Unterdruckkammer 34 vorgesehen. Diese beiden Paare sind wiederum durch eine im Gehäuse 18 feststehende Wand 36 getrennt. Das gesamte Gehäuse 18 mit seiner Kammeranordnung 22 wird von mehreren Befestigungsbolzen 38 durchsetzt, die zur Anbringung des Unterdruckbremskraftverstärkers 10 an einem Fahrzeugchassis dienen.

Die Unterdruckkammern 32 und 34 sind im Betrieb des Fahrzeugs dauerhaft mit einer Unterdruckquelle, beispielsweise dem Ansaugtrakt des Fahrzeugs verbunden. Die Arbeitskammern 24 und 26 können in an sich bekannter Weise wahlweise je nach Betätigung der Steuerventilanordnung 14 mit der Unterdruckquelle oder der Umgebungsatmosphäre verbunden werden, um eine über das Bremspedal und das Krafteingangsglied 12 ausgeübte Bremskraft zu verstärken. Das Steuerventilgehäuse 20 ist über die Rückstellfeder 40 in die in Figur 1 gezeigte Stellung vorgespannt.

Figur 2 zeigt die Steuerventilanordnung 14 in Detaildarstellung. Man erkennt, dass das Krafteingangsglied 12 in das Steuerventilgehäuse 20 entlang der Längsachse A hineinragt. Ein sphärisches Ende 50 des Krafteingangsglieds ist in einer entsprechenden Aufnahme 52 eines Übertragungskolbens 54 aufgenommen. Dieser weist eine ringförmige Ausnehmung auf, in der ein Anschlagelement 56 angebracht ist. Das Anschlagelement 56 definiert die in Figur 1 gezeigte Ausgangsposition des Steuerventilgehäuses 20 relativ zum Gehäuse 18.

An seinem in Figur 2 linken Ende weist Übertragungskolben 54 einen zylindrischen Abschnitt 58 auf. Dieser ragt in einen durchmesserverengten Bereich 60 des Steuerventilgehäuses 20 hinein. In diesem ist mit Axialspiel ein Kontaktelement 62 aufgenommen. Ferner zeigt Figur 2 eine gummielastische Reaktionsscheibe 64, die in einer topfartigen Aufnahme des Kraftausgangsglieds 16 aufgenommen ist und in kraftübertragender Anlage mit dem Steuerventilgehäuse 20 steht.

Schließlich zeigt Figur 2 die für einen Unterdruckbremskraftverstärker übliche Anordnung von inneren und äußeren Dichtsitzen 66 und 68 zum wahlweise Verbinden der Arbeitskammern 24, 26 mit der Unterdruckquelle oder der Umgebungsatmosphäre. Hierauf wird im Detail nicht weiter eingegangen, da bekannt.

Wie vorstehend erwähnt, ist das Kontaktelement 62 mit Axialspiel in dem durchmesserverengten Bereich 60 des Steuerventilgehäuses 20 aufgenommen. Bei der Ausführungsform gemäß Figuren 1 und 2 sind der Übertragungskolben 58 magnetisiert und das Kontaktelement 62 ferromagnetisch ausgebildet. Es versteht sich, dass auch das Kontaktelement 62 magnetisiert und der Übertragungskolben 58 ferromagnetisch oder beide Teile magnetisiert ausgebildet sein können. Jedenfalls wird durch jede der vorstehend genannten Möglichkeiten erreicht, dass das Kontaktelement 62 durch die anliegenden Magnetkräfte dauerhaft in der in Figur 2 gezeigten Position in Anlage mit dem Abschnitt 58 des Übertragungskolbens 54 verbleibt. Kommt es also fahrzeugbetriebsbedingt zu Vibrationen, so führen diese nicht dazu, dass das Kontaktelement 62 relativ zu dem Abschnitt 58 des Übertragungskolbens 54 vibriert und entsprechende Vibrationsgeräusche erzeugt. Durch das erfindungsgemäße Anlegen eines Magnetfeldes wird das Kontaktelement 62 sozusagen in seine in Figur 2 gezeigte Stellung magnetisch "vorgespannt" und damit gegen die geräuschinduzierende Vibrationen gesichert.

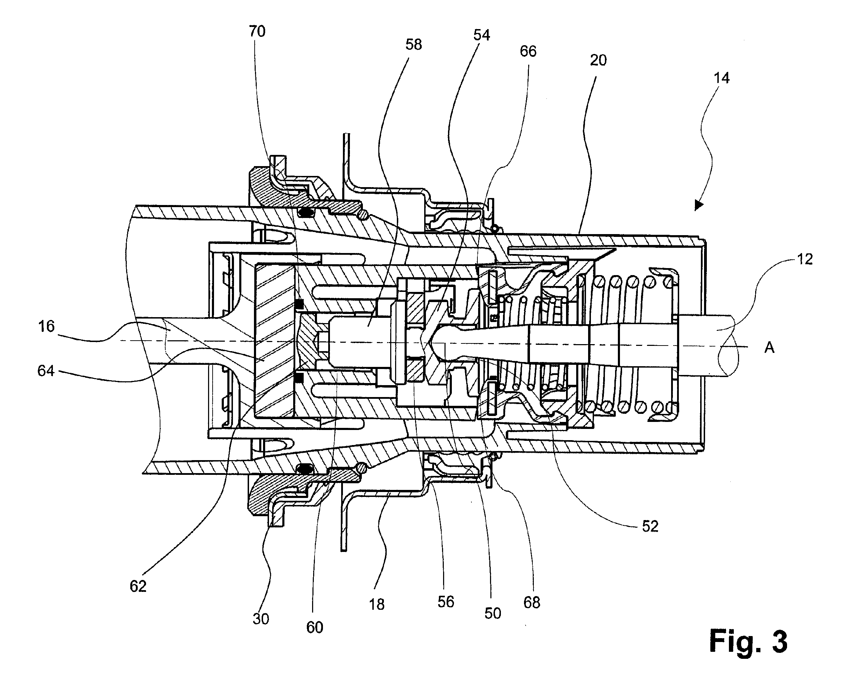

Figur 3 zeigt eine zweite Ausführungsform der Erfindung. Diese unterscheidet sich von der ersten Ausführungsform gemäß Figur 2 dadurch, dass ein Permanentmagnet 70 in eine korrespondierende Ausnehmung an der der gummielastischen Reaktionsscheibe 64 zugewandten Stirnfläche des Steuerventilgehäuses 20 eingesetzt ist. Der Permanentmagnet 70 ist beispielsweise ringförmig ausgebildet und sorgt für ein Magnetfeld in Richtung der Längsachse A. Das Kontaktelement 62 und der Übertragungskolben 54/58 können dabei wiederum ferromagnetisch oder magnetisiert ausgebildet sein. Jedenfalls wirkt das Magnetfeld des Permanentmagneten 70 wiederum so, dass das Kontaktelement 62 magnetisch auf den Übertragungskolben 54/58 "vorgespannt" wird.

Die Verwendung des vorkonfektionierten Permanentmagneten 70 hat den Vorteil, dass dieser mit einer vorbestimmten Feldstärke ausgebildet werden kann und dass die übrigen Komponenten der Kraftübertragungsanordnung lediglich aus ferromagnetischem Material ausgebildet werden können, ohne besonders auf deren Magnetisierung achten zu müssen.

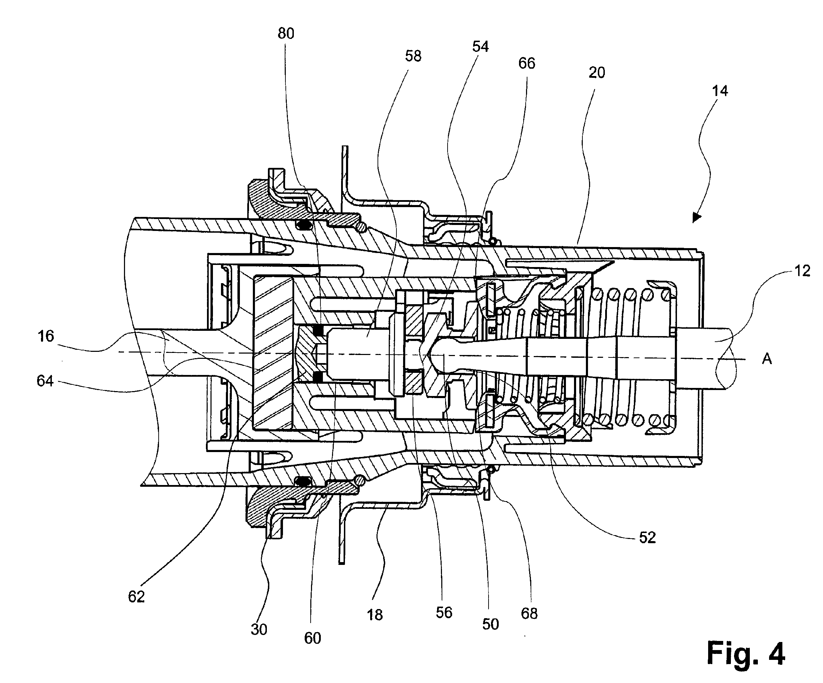

Figur 4 zeigt eine weitere Ausführungsform der Erfindung, die sich von der Ausführungsform gemäß Figur 3 dadurch unterscheidet, dass ein Permanentmagnet 80 nun am Kontaktelement 62 angeordnet ist. Die Funktionsweise bleibt die gleiche, wie mit Bezug auf Figuren 2 und 3 beschrieben.

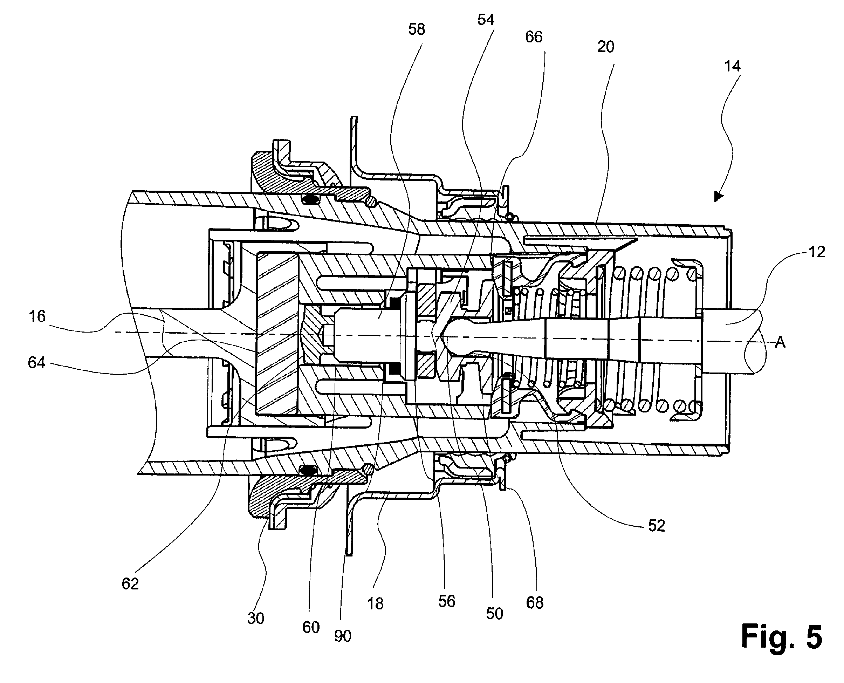

Schließlich zeigt Figur 5 eine weitere Ausführungsform der Erfindung, bei der ein Permanentmagnet 90 am Übertragungskolben 54/58 angebracht ist. Wiederum ist die Funktionsweise die gleiche, wie mit Bezug auf Figuren 2 und 3 beschrieben.

Die Ausführungsformen gemäß der Figuren 2 bis 5 lassen sich erfindungsgemäß auch untereinander kombinieren, nämlich derart, dass mehrere Komponenten mit entsprechenden Permanentmagneten 70, 80, 90 versehen oder unmittelbar magnetisiert werden.

## Patentansprüche

1. Unterdruckbremskraftverstärker (10) für eine Kraftfahrzeugbremsanlage, umfassend:
- ein entlang einer Längsachse (A) bewegbares Krafteingangsglied, das mit einem Bremspedal gekoppelt oder koppelbar ist,
- eine durch das Krafteingangsglied (12) betätigbare Steuerventilanordnung (20),
- eine in einem Gehäuse (18) angeordnete Kammeranordnung (22), mit wenigstens einer Arbeitskammer (24, 26) und wenigstens einer Unterdruckkammer (32, 34), die über eine bewegliche Wand (28, 30) voneinander getrennt sind, und
- einem Kraftausgangsglied (16) zum Übertragen einer Betätigungskraft, wobei die wenigstens eine Arbeitskammer (24, 26) wahlweise mit einer Unterdruckquelle oder der Atmosphäre verbindbar ist, wobei die Steuerventilanordnung (20) ein Steuerventilgehäuse (18) aufweist, das mit der wenigstens einen beweglichen Wand (28, 30) zur gemeinsamen Bewegung gekoppelt ist,
wobei die Steuerventilanordnung (20) eine axialspielbehaftete Kraftübertragungsanordnung aufweist, die im Kraftübertragungsweg zwischen dem Krafteingangsglied (12) und dem Kraftausgangsglied (16) angeordnet ist,
**dadurch gekennzeichnet, dass** wenigstens ein Bauteil (54, 56, 58, 62, 64) der Kraftübertragungsanordnung aus magnetischem oder ferromagnetischem Material hergestellt und einem permanent anliegenden Magnetfeld ausgesetzt ist, um das wenigstens eine Bauteil magnetisch in eine Ausgangsstellung vorzuspannen.

2. Unterdruckbremskraftverstärker (10) nach Anspruch 1,
**dadurch gekennzeichnet, dass** die Kraftübertragungsanordnung in axialer Richtung vom Krafteingangsglied (12) zum Kraftausgangsglied (16) betrachtet einen Übertragungskolben (54), ein Kontaktelement (62) und eine an dem Kraftausgangsglied (16) anliegende gummielastische Reaktionsscheibe (64) aufweist.

3. Unterdruckbremskraftverstärker (10) nach Anspruch 1 oder 2,
**dadurch gekennzeichnet, dass** die Kraftübertragungsanordnung ein Wegbegrenzungselement (56) aufweist.

4. Unterdruckbremskraftverstärker (10) nach Anspruch 2 oder 3,
**dadurch gekennzeichnet, dass** eine der Komponenten Übertragungskolben (54), Kontaktelement (62), Reaktionsscheibe (64) und Wegbegrenzungselement (56) magnetisiert ist und wenigstens eine weitere diese Komponenten ferromagnetisch ausgebildet ist.

5. Unterdruckbremskraftverstärker (10) nach Anspruch 4,
**dadurch gekennzeichnet, dass** die gummielastische Reaktionsscheibe (64) mit magnetisierbaren Partikeln, insbesondere aus ferromagnetischem Material, ausgebildet ist, wobei diese zur Ausbildung eines Magnetfelds magnetisiert sind.

6. Unterdruckbremskraftverstärker (10) nach einem der vorangehenden Ansprüche,
**dadurch gekennzeichnet, dass** an wenigstens einem Bauteil der Steuerventilanordnung (20) ein Permanentmagnet (70, 80, 90) angebracht oder in diesem integriert ist.

7. Unterdruckbremskraftverstärker (10) nach Anspruch 6,
**dadurch gekennzeichnet, dass** der Permanentmagnet (70) am Steuerventilgehäuse (18) angebracht oder in diesem integriert ist.

8. Unterdruckbremskraftverstärker (10) nach Anspruch 6 oder 7,
**dadurch gekennzeichnet, dass** der Permanentmagnet (80) am Kontaktelement (62) angebracht oder in diesem integriert ist.

9. Unterdruckbremskraftverstärker (10) nach einem der Ansprüche 6 bis 8,
**dadurch gekennzeichnet, dass** der Permanentmagnet (90) am Übertragungskolben (54) angebracht oder in diesem integriert ist.

10. Unterdruckbremskraftverstärker (10) nach einem der vorangehenden Ansprüche, **dadurch gekennzeichnet, dass** das Magnetfeld in axialer Richtung wirksam ist.

11. Verfahren zum Herstellen eines Unterdruckbremskraftverstärkers nach einem der vorangehenden Ansprüche, umfassend
- ein entlang einer Längsachse (A) bewegbares Krafteingangsglied, das mit einem Bremspedal gekoppelt oder koppelbar ist,
- eine durch das Krafteingangsglied (12) betätigbare Steuerventilanordnung (20),
- eine in einem Gehäuse (18) angeordnete Kammeranordnung (22), mit wenigstens einer Arbeitskammer (24, 26) und wenigstens einer Unterdruckkammer (32, 34), die über eine bewegliche Wand (28, 30) voneinander getrennt sind, und
- einem Kraftausgangsglied (16) zum Übertragen einer Betätigungskraft, wobei die wenigstens eine Arbeitskammer (24, 26) wahlweise mit einer Unterdruckquelle oder der Atmosphäre verbindbar ist, wobei die Steuerventilanordnung (20) ein Steuerventilgehäuse (18) aufweist, das mit der wenigstens einen beweglichen Wand (28, 30) zur gemeinsamen Bewegung gekoppelt ist,
wobei die Steuerventilanordnung (20) eine axialspielbehaftete Kraftübertragungsanordnung aufweist, die im Kraftübertragungsweg zwischen dem Krafteingangsglied (12) und dem Kraftausgangsglied (16) angeordnet ist,
**gekennzeichnet durch** den Schritte:
- Herstellen wenigstens eines Bauteils der Kraftübertragungsanordnung aus magnetischem oder ferromagnetischem Material und
- Anlegen eines Permanentmagnetfeldes an die Kraftübertragungsanordnung.

## Claims

1. A vacuum brake booster (10) for a motor vehicle brake system, comprising:
- a force input member movable along a longitudinal axis (A), which force input member is coupled or couplable to a brake pedal,
- a control valve arrangement (20) actuable by the force input member (12),
- a chamber arrangement (22) arranged within a housing (18), having at least one working chamber (24, 26) and at least one vacuum chamber (32, 34), which are separated from one another by a movable wall (28, 30), and
- a force output member (16) for transmitting an actuating force,
wherein the at least one working chamber (24, 26) is connectable selectively with a vacuum source or the atmosphere, wherein the control valve arrangement (20) has a control valve housing (18), which is coupled with the at least one movable wall (28, 30) for common movement,
wherein the control valve arrangement (20) has a force transmitting arrangement provided with an axial play, which is arranged in the force transmitting path between the force input member (12) and force output member (16),
**characterized in that** at least one component (54, 56, 58, 62, 64) of the force transmitting arrangement is manufactured from magnetic or ferromagnetic material and is subjected to a permanently applied magnetic field, in order to magnetically bias the at least one component into a starting position.

2. The vacuum brake booster (10) according to Claim 1,
**characterized in that** the force transmitting arrangement has, viewed in the axial direction from the force input member (12) to the force output member (16), a transmitting piston (54), a contact element (62) and a rubber-elastic reaction disc (64) abutting against the force output member (16).

3. The vacuum brake booster (10) according to Claim 1 or 2,
**characterized in that** the force transmitting arrangement has a travel limiting element (56).

4. The vacuum brake booster (10) according to Claim 2 or 3,
**characterized in that** one of the components of transmitting piston (54), contact element (62), reaction disc (64) and travel limiting element (56) is magnetized and at least one other these components is of ferromagnetic form.

5. The vacuum brake booster (10) according to Claim 4,
**characterized in that** the rubber-elastic reaction disc (64) is formed with magnetizable particles, in particular of ferromagnetic material, these particles being magnetized to form a magnetic field.

6. The vacuum brake booster (10) according to one of the preceding claims,
**characterized in that** a permanent magnet (70, 80, 90) is fitted on or integrated in at least one component of the control valve arrangement (20).

7. The vacuum brake booster (10) according to Claim 6,
**characterized in that** the permanent magnet (70) is fitted on or integrated in the control valve housing (18).

8. The vacuum brake booster (10) according to Claim 6 or 7,
**characterized in that** the permanent magnet (80) is fitted on or integrated in the contact element (62).

9. The vacuum brake booster (10) according to one of Claims 6 to 8,
**characterized in that** the permanent magnet (90) is fitted on or integrated in the transmitting piston (54).

10. The vacuum brake booster (10) according to one of the preceding claims,
**characterized in that** the magnetic field acts in the axial direction.

11. A method for manufacturing a vacuum brake booster according to one of the preceding claims, comprising
- a force input member movable along a longitudinal axis (A), which force input member is coupled or couplable to a brake pedal,
- a control valve arrangement (20) actuable by the force input member (12),
- a chamber arrangement (22) arranged within a housing (18), having at least one working chamber (24, 26) and at least one vacuum chamber (32, 34), which are separated from one another by a movable wall (28, 30), and
- a force output member (16) for transmitting an actuating force,
wherein the at least one working chamber (24, 26) is connectable selectively with a vacuum source or the atmosphere, wherein the control valve arrangement (20) has a control valve housing (18), which is coupled with the at least one movable wall (28, 30) for common movement,
wherein the control valve arrangement (20) has a force transmitting arrangement provided with an axial play, which is arranged in the force transmitting path between the force input member (12) and force output member (16),
**characterized by** the steps:
- manufacturing at least one component of the force transmitting arrangement from magnetic or ferromagnetic material and
- applying a permanent magnetic field to the force transmitting arrangement.

## Revendications

1. Servofrein à dépression (10) pour un système de freinage d'automobile, comprenant
- un organe d'entrée de force qui est mobile le long d'un axe longitudinal (A) et qui est ou peut être couplé à une pédale de frein,
- un système soupape de commande (20) qui peut être actionné par ledit organe d'entrée de force (12),
- un système de chambres (22) qui est disposé dans un boîtier (18) et qui comprend au moins une chambre de travail (24, 26) et au moins une chambre de dépression (32, 34) séparées l'une de l'autre par une cloison mobile (28, 30), et
- un organe de sortie de force (16) destiné à transmettre une force d'actionnement,
ladite au moins une chambre de travail (24, 26) pouvant au choix être reliée à une source de dépression ou à l'atmosphère, le système soupape de commande (20) présentant un boîtier de soupape de commande (18) qui est couplé à ladite au moins une paroi mobile (28, 30) pour un déplacement conjoint,
le système soupape de commande (20) présentant un dispositif de transmission de force à jeu axial qui est disposé sur la trajectoire de transmission de force, entre l'organe d'entrée de force (12) et l'organe de sortie de force (16),
**caractérisé en ce qu'**au moins un composant (54, 56, 58, 62, 64) du dispositif de transmission de force est fabriqué à partir d'un matériau magnétique ou ferromagnétique et est soumis à un champ magnétique appliqué en permanence pour la polarisation magnétique dudit au moins un composant dans une position de départ.

2. Servofrein à dépression (10) selon la revendication 1,
**caractérisé en ce que** le dispositif de transmission de force, considéré dans la direction axiale depuis l'organe d'entrée de force (12) vers l'organe de sortie de force (16), présente un piston de transmission (54), un élément de contact (62) et un disque de réaction à élasticité de caoutchouc appliqué contre l'organe de sortie de force (16).

3. Servofrein à dépression (10) selon la revendication 1 ou 2,
**caractérisé en ce que** le dispositif de transmission de force présente un élément limiteur de trajet (56).

4. Servofrein à dépression (10) selon la revendication 2 ou 3,
**caractérisé en ce qu'**un des composants, tels que le piston de transmission (54), l'élément de contact (62), le disque de réaction (64) et l'élément limiteur de trajet (56), est magnétisé et **en ce qu'**au moins un autre de ces composants est réalisé de manière ferromagnétique.

5. Servofrein à dépression (10) selon la revendication 4,
**caractérisé en ce que** le disque de réaction (64) à élasticité de caoutchouc est réalisé à partir de particules magnétisables, plus particulièrement à partir d'un matériau ferromagnétique, ceux-ci étant magnétisés pour générer un champ magnétique.

6. Servofrein à dépression (10) selon l'une des revendications précédentes,
**caractérisé en ce qu'**un aimant permanent (70, 80, 90) est monté sur ledit au moins un composant du système soupape de commande (20) ou intégré dans celui-ci.

7. Servofrein à dépression (10) selon la revendication 6,
**caractérisé en ce que** l'aimant permanent (70) est monté sur le boîtier de soupape de commande (18) ou intégré dans celui-ci.

8. Servofrein à dépression (10) selon la revendication 6 ou 7,
**caractérisé en ce que** l'aimant permanent (80) est monté sur l'élément de contact (62) ou intégré dans celui-ci.

9. Servofrein à dépression (10) selon l'une des revendications 6 à 8,
**caractérisé en ce que** l'aimant permanent (90) est monté sur le piston de transmission (54) ou intégré dans celui-ci.

10. Servofrein à dépression (10) selon l'une des revendications précédentes,
**caractérisé en ce que** le champ magnétique agit dans la direction axiale.

11. Procédé pour fabriquer un servofrein à dépression (10) selon l'une des revendications précédentes, comprenant
- un organe d'entrée de force qui est mobile le long d'un axe longitudinal (A) et qui est ou peut être couplé à une pédale de frein,
- un système soupape de commande (20) qui peut être actionné par l'organe d'entrée de force (12),
- un système de chambres (22) qui est disposé dans un boîtier (18) et qui comprend au moins une chambre de travail (24, 26) et au moins une chambre de dépression (32, 34) séparées l'une de l'autre par une cloison mobile (28, 30), et
- un organe de sortie de force (16) destiné à transmettre une force d'actionnement,
ladite au moins une chambre de travail (24, 26) pouvant au choix être reliée à une source de dépression ou à l'atmosphère, le système soupape de commande (20) présentant un boîtier de soupape de commande (18) qui est couplé à ladite au moins une paroi mobile (28, 30) pour un déplacement conjoint,
le système soupape de commande (20) présentant un dispositif de transmission de force à jeu axial qui est disposé sur la trajectoire de transmission de force, entre l'organe d'entrée de force (12) et l'organe de sortie de force (16),
**caractérisé par** les étapes suivantes :
- la fabrication d'au moins un composant du dispositif de transmission de force à partir d'un matériau magnétique ou ferromagnétique et
- l'application d'un champ magnétique permanent au dispositif de transmission de force.
